# EUROPEAN PATENT SPECIFICATION

(11) **EP 3 075 982 B1**
(45) Date of publication and mention of the grant of the patent: **08.01.2020**
(21) Application number: 13898164.2
(22) Date of filing: 27.11.2013
(51) Int. Cl.: F02C 3/10, F02C 6/00, F02C 9/28, F02C 7/36

(54) **GAS TURBINE SUITABLE FOR RENEWABLE ENERGY AND CONTROL METHOD THEREOF**
GASTURBINE FÜR ERNEUERBARE ENERGIE UND STEUERUNGSVERFAHREN DAFÜR
TURBINE À GAZ APPROPRIÉE POUR DE L'ÉNERGIE RENOUVELABLE ET SON PROCÉDÉ DE COMMANDE

(43) Date of publication of application: 05.10.2016
(73) Proprietor: Hitachi, Ltd., Chiyoda-ku Tokyo 100-8280 (JP)
(72) Inventor: KUSUMI, Naohiro, Tokyo 100-8280 (JP); HINO, Noriaki, Tokyo 100-8280 (JP); AUNG, Kothet, Tokyo 100-8280 (JP)
(74) Representative: MERH-IP Matias Erny Reichl Hoffmann Patentanwälte PartG mbB
(86) International application number: PCT/JP2013/081831
(87) International publication number: WO 2015/079508

(56) References cited:
- JP-A- 2007 505 261
- JP-A- 2008 097 643
- JP-A- 2008 285 571
- JP-A- 2012 047 083
- JP-A- 2012 067 764
- JP-A- 2013 160 154
- JP-A- 2013 177 860
- JP-B2- 4 053 965
- US-A1- 2005 056 021
- US-A1- 2006 150 633
- US-A1- 2006 150 633

## Description

### Technical Field

The present invention relates to a combination of renewable energy with a power generation apparatus using a gas turbine. In particular, the present invention relates to a control apparatus and a control method for suppressing an output change, satisfying requirements of a system to be connected, and improving an output and an efficiency of the gas turbine according to operation conditions.

### Background Art

A thermal power generation plant mainly generates power by burning fossil fuel to take out combustion heat, and using the combustion heat to operate a power generator. Various apparatuses have been provided according to the combinations of fuel and power generators. Examples of such apparatuses include an apparatus that generates power by burning coal or heavy oil in a boiler to take out combustion heat, and generating steam by the combustion heat to operate a steam turbine, a gas turbine power generation apparatus that generates power by compressing atmospheric air with a compressor, and mixing and burning the compressed air with fuel in a combustor to operate a gas turbine, or a combined cycle power generation apparatus that operates a steam turbine with steam generated in an exhaust heat recovery boiler using an exhaust heat burned in a gas turbine.

Meanwhile, power generation using renewable energy, such as natural energy, has been attracting attentions from a viewpoint of reducing carbon dioxide. In particular, power generation using wind power generation or solar power generation has been rapidly spreading. However, it is not possible to control natural conditions, and a load of the obtained power generation output becomes a variable load instead of a constant load. If such a power supply is connected to a system, the load of the system becomes unstable and a constant frequency of the system cannot be maintained. Meanwhile, steam power generation, such as the power generation using a gas turbine, is generally designed to reach the maximum efficiency during rated operations, such that the efficiency decreases during partial load operations.

PTL 1 discloses a control apparatus that issues a power generation command according to the system load, and adjusts an exhaust heat recovery volume or heat storage volume of the thermoelectric load in a power system in which a plurality of power supplies and thermoelectric loads having different volumes, such as a gas engine or a gas turbine power generator, are connected to correspond to an unstable power supply of wind power generation or solar power generation. PTL 2 discloses an apparatus and a control method when the electric power obtained by wind power generation is combined with a combined plant, such as a plant for reforming heavy oil. PTL 3 relates to an electrical power generating system which is driven by a multispool gas turbine engine including at least first and second spools.

### Citation List

### Patent Literature

PTL 1: Publication of JP 2005-151746 A
PTL 2: Publication of JP 2008-285571 A
PTL 3: Publication of US 2005/0056021 A1

### Summary of Invention

### Technical Problem

In the power generation facility using renewable energy, a load change is a problem, because the output of such power generation facility is affected by the change of weather. In the future, the renewable energy will be further introduced by considering environment and diversification of energy sources, and the problem of the load change will be more apparent. In the methods disclosed in PTL 1 and PTL 2, the renewable energy is combined with an existing power generation apparatus represented by a gas turbine power generation apparatus, while a separate apparatus that recovers excessive power relative to necessary power supply volume are also provided. However, regulations and rules of the system to be connected are not considered. Since the output characteristics of each power generation apparatus are not considered, a desired load is not always attained when the actual output corresponding to a load command is combined with the power generation output obtained from the renewable energy. It is, therefore, difficult to correspond to generation and supply of power within the regulations of the system to be connected, relative to the load change of the renewable energy.

It is an object of the present invention to provide a power generation system having a high following property to follow a load change.

### Solution to Problem

To solve the above problem, an embodiment of the present invention is a multi-shaft gas turbine power generation system according to claim 1 and including inter alia a compressor that compresses air to generate compressed air, a combustor that generates a combustion gas from the compressed air and fuel, a gas generator including a high pressure turbine driven by the combustion gas, a power turbine including a low pressure turbine driven by a gas exhausted from the gas generator and a main power generator that generates power by a rotational force of the low pressure turbine to supply power to a system, an electric motor and power generator connected to the gas generator and the power turbine via a frequency converter, and a control apparatus, the gas generator and the power turbine having different shafts, in which the control apparatus receives a load target of the system and a load change factor of the system and outputs a control signal of the frequency converter. A method for controlling a multi-shaft gas turbine power generation system is further provided according to claim 7.

### Advantageous Effects of Invention

According to the embodiment of the present invention, a power generation system having a high following property to follow a load change is provided.

### Brief Description of Drawings

[FIG. 1] FIG. 1 illustrates a two-shaft gas turbine power generation apparatus according to an embodiment of the present invention.
[FIG. 2] FIG. 2 illustrates examples of operation patterns of the two-shaft gas turbine according to the embodiment of the present invention.
[FIG. 3] FIG. 3 is an explanatory diagram illustrating an apparatus that realizes a control apparatus and a control method of a gas turbine capable of corresponding to renewable energy according to the embodiment of the present invention.
[FIG. 4] FIG. 4 is an explanatory diagram illustrating an example of a measurement signal stored in a related information database 300 of the control apparatus and the control method of the gas turbine capable of corresponding to renewable energy according to the embodiment of the present invention.
[FIG. 5] FIG. 5 is an explanatory diagram illustrating an example of operation data stored in an operation information database 600 in the control apparatus and the control method of the gas turbine capable of corresponding to the renewable energy according to the embodiment of the present invention.
[FIG. 6] FIG. 6 is an explanatory diagram illustrating a prediction function for predicting a power generation output of wind power generation facility by a prediction unit 400 of wind power generation in the control apparatus according to the embodiment of the present invention.
[FIG. 7] FIG. 7 is a flowchart for generating a power generation command by a controller according to the embodiment of the present invention.
[FIG. 8] FIG. 8 additionally explains the characteristic of the gas turbine power generation apparatus in the flowchart for the controller according to the embodiment of the present invention.
[FIG. 9] FIG. 9 additionally explains a step of setting a load command to M/G relative to an atmospheric temperature in the flowchart for the controller according to the embodiment of the present invention.
[FIG. 10] FIG. 10 additionally explains a step of setting a load command to M/G during a partial load in the flowchart for the controller according to the embodiment of the present invention.
[FIG. 11] FIG. 11 illustrates an initial display screen displayed on an image display apparatus according to the embodiment of the present invention.
[FIG. 12] FIG. 12 illustrates an operation state display screen displayed on the image display apparatus according to the embodiment of the present invention.
[FIG. 13] FIG. 13 is a display setting screen displaying a measurement signal, related information, and setting conditions on the image display apparatus according to the embodiment of the present invention.
[FIG. 14] FIG. 14 illustrates trend graphs displayed on the image display apparatus according to the embodiment of the present invention.
[FIG. 15] FIG. 15 is an explanatory diagram illustrating a control apparatus and a control method of a gas turbine capable of corresponding to renewable energy according to a second embodiment of the present invention.
[FIG. 16] FIG. 16 is an explanatory diagram illustrating a function of a solar power generation prediction unit according to the second embodiment of the present invention.

### Description of Embodiments

A best mode of a control apparatus and a control method of a gas turbine capable of corresponding to renewable energy will be described below by referring to the accompanying drawings.

### First Embodiment

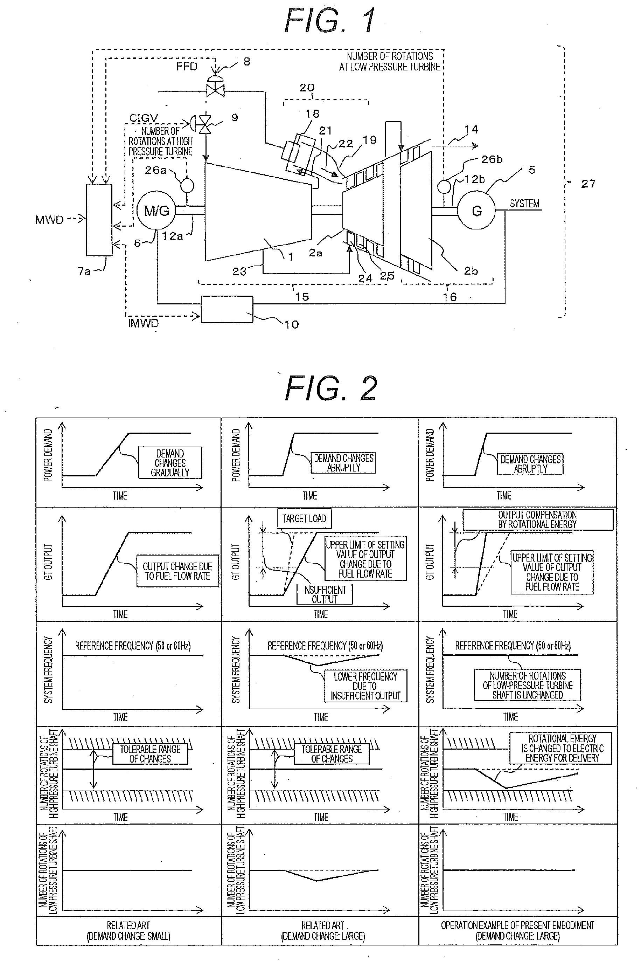

FIG. 1 is an explanatory view illustrating main apparatuses of a two-shaft gas turbine power generation apparatus according to the present embodiment. A two-shaft gas turbine 27 includes a gas generator 15, a power turbine 16, a GT control apparatus 7a, and a frequency converter 10.

A power turbine 16 includes a low pressure turbine 2b, a low pressure turbine shaft 12b, and a power generator 5. For power generation, the power turbine 16 rotates at an approximately constant number of rotations and drives the power generator 5 at an approximately constant number of rotations. The power generated by the power generator 5 is sent to a power consumer via an electric power cable.

The gas generator 15 includes a compressor 1, a combustor 20, a high pressure turbine 2a, a sub-electric motor/power generator 6 that functions as an electric motor and a power generator, and a gas generator shaft 12a.

The gas generator 15 is mechanically separated from the power turbine 16, and can be rotated at the number of rotations different from that of the power turbine.

The compressor 1 sucks and compresses atmospheric air to generate compressed air 21. An inlet guide vane (IGV) 9 is provided at the inlet port of the compressor 1. The IGV 9 rotates by itself to change an opening area of the compressor 1. By changing the opening, the amount of air flowing into the compressor 1 can be changed.

The amount of air flowing into the compressor 1 can also be adjusted according to the number of rotations of the gas generator 15.

The combustor 20 mixes the compressed air 21 generated by the compressor 1 with fuel and burns the mixture by a burner 18 to generate a combustion gas 22. The combustion gas 22 passes through a combustor liner 19 to firstly flow into the high pressure turbine 2a. The fuel burned in the burner 18 is adjusted by a fuel flow rate control valve 8 provided in a fuel pipe.

The high pressure turbine 2a receives rotational force from the energy of the high temperature and high pressure combustion gas 22. The rotational force is transmitted to the compressor 1 through the gas generator shaft 12a to rotate the compressor 1. The combustion gas 22 flows into the low pressure turbine 2b of the power turbine 16 after a part of the energy is extracted in the high pressure turbine 2a. The low pressure turbine 2b obtains rotational force from the energy of the combustion gas 22, and transmits the rotational force to the generator 5 through the low pressure turbine shaft 12b to rotate the generator 5. The combustion gas 22 having passed through the low pressure turbine is discharged as an exhaust gas 14.

Part of the air compressed by the compressor 1 is bled as a cooling air 23 for turbines and supplied to the high pressure turbine 2a or the low pressure turbine 2b without passing through the combustor 20. Part of the cooling air 23 is used for cooling a stator vane 24 and a rotor vane 25 that constitute the turbine 2.

The sub-electric motor/power generator 6 connected to the high pressure turbine shaft 12a is connected to the power system via the frequency converter 10. By supplying and receiving the electric power to and from the power system, the operation of the high pressure turbine shaft can be adjusted. Specifically, the sub-electric motor/power generator 6 operates as a motor when the electric power is supplied from the frequency converter 10, and supplies energy to the high pressure turbine shaft 12a. In contrast, when the electric power is extracted by the frequency converter 10, the sub-electric motor/power generator operates as a generator and reduces energy of the high pressure turbine shaft 12a.

The controller 7a receives the input that includes the number of rotations of the high pressure turbine detected by a rotational speed detector 26a for the high pressure turbine, the number of rotations of the low pressure turbine detected by a rotational speed detector 26b for the low pressure turbine, and an output command (MWD). Subsequently, signals including an FFD signal that controls the flow rate control valve 8, a CIGV signal that controls the opening of the IGV 9, and an IMWD signal that controls the output power of the frequency converter 10 are transmitted. The control apparatus 7a may be configured to have various protecting functions.

In the present embodiment, if it is desired to increase the output, for example, in addition to the output control, by controlling the fuel flow rate, the number of rotations of the high pressure turbine shaft 12a is decreased to discharge the rotational energy of the shaft as the electric power. If it is desired to decrease the output, the number of rotations of the high pressure turbine shaft 12a is increased to allow the electric power to be stored as rotational energy. By using the output changing means that does not depend on the fuel flow rate, a high output changing speed can be attained, while preventing the reduction of service life due to thermal fatigue or the like.

The frequency converter 10 according to the present embodiment can be configured to have a smaller volume compared to the one that adjusts the entire output of the gas turbine. In the two-shaft gas turbine according to the present embodiment, the low pressure turbine responsible for the majority of the output rotates at a constant speed. Since the frequency converter 10 adjusts the number of rotations on the side of the high pressure turbine that operates at a variable speed, the volume of the frequency converter 10 can be decreased. For example, if it is desired to change the output equivalent to 10% of the rated output of the gas turbine, in addition to the output change by the fuel flow rate, the frequency converter 10 having a volume equivalent to 10% of the rated output may be used. Thus, the cost of the frequency converter 10 can be decreased.

An operation of the two-shaft gas turbine 27 is described to implement the above-described technique.

In the two-shaft gas turbine, balance adjustment control in which the energy recovered by the high pressure turbine 2a is made to be equal to the energy consumed in the compressor 1 is performed. In general, this control method includes changing the number of rotations of the gas generator, or changing the flow rate of air sucked by the compressor by adjustment of the opening of the IGV 9. For example, when the number of rotations is higher than the setting value, the consumption power of the compressor 1 increases and the number of rotations decreases by increasing the opening of the IGV 9 to increase the flow rate of the air sucked by the compressor. In contrast, by decreasing the opening of the IGV 9, the number of rotations of the gas generator 15 can be increased.

When the output changes due to the fuel flow rate, the two-shaft gas turbine 27 operates as follows. The GT control apparatus 7a sends a fuel flow rate command (FFD) to the fuel flow rate control valve 8 according to a GT output command (MWD), and supplies necessary fuel to the combustor 20 to balance the recovery energy between the output of the generator 5 and the low pressure turbine 2b. Thus, the number of rotations of the power turbine 16 is controlled to be approximately constant. At this time, the GT control apparatus 7a controls the opening of the IGV 9 such that the energy recovered by the high pressure turbine 2a is balanced with the energy needed for driving the compressor 1 to attain a preferable number of rotations of the gas generator 15. Thus, the number of rotations of the gas generator 15 is not uniquely determined, but is subject to change.

The operation of the gas turbine in the case of increasing the demand according to the present embodiment is described by referring to FIG. 2. The left column illustrates the case where a demand change of the gas turbine is small in a gas turbine according to the related art technique, the center column illustrates the case where the demand change is large according to the related art technique, and the right column illustrates the case where the demand change of the gas turbine is large according to the present embodiment. For each column, the vertical axes represent, in this order from the top, the power demand, the GT output, the system frequency, the number of rotations of the high pressure turbine shaft, and the number of rotations of the low pressure turbine shaft. The horizontal axes represent time.

In the case where the demand change is small in the gas turbine according to the related art technique, the demand change can be absorbed by the output control by the fuel flow rate. However, when the demand change becomes larger, the output change cannot follow the change and the output becomes insufficient. Accordingly, the number of rotations of the low pressure turbine shaft 12b decreases and the system frequency also decreases correspondingly.

In the gas turbine according to the present embodiment, the frequency converter 10 is used to extract, from the sub-electric motor/power generator, an insufficient portion of the output caused by the output change of the fuel flow rate. The electric power is insufficient when only the fuel flow rate is controlled. However, in the configuration of the present embodiment, the number of rotations of the high pressure turbine shaft 12a decreases and the rotational energy is converted to the electric power to compensate for the insufficiency. At this time, the opening of the IGV 9 is determined such that the power of the compressor 1 is balanced with the recovery power of the high pressure turbine 2a at the decreased number of rotations. The output frequency of the high pressure turbine shaft 12a is converted to a reference frequency by the frequency converter 10. By doing this, the frequency of the system can be stabilized even when the demand changes abruptly. The frequency converter 10 may be implemented by, for example, a known inverter/converter.

When the power of the compressor 1 is configured to be balanced with the recovery power of the high pressure turbine 2a, that is, the IGV 9 is opened when the number of rotations decreases, and the IGV 9 is closed when the number of rotations increases, the flow rate of the air sucked by the compressor 1 is approximately constant. Thus, the control apparatus controls the IGV 9 in such a manner that the flow rate change of the air flowing through the compressor 1 is suppressed when the number of rotations of the gas generator 15 changes due to the operation of the frequency converter 10. Therefore, a highly reliable operation can be achieved.

In general, when the IGV 9 is opened, the efficiency of the compressor 1 improves. At this time, if, for example, the flow rate of the fuel is increased and the number of rotations is decreased during the increase of the output, the efficiency of the compressor improves, the temperature of the air discharged from the compressor 1 decreases, and the operating power of the compressor 1 also decreases. In addition to the increase of the output caused by the increase of the fuel, the output also increases for the decrease of the operating power of the compressor 1. Further, due to the decrease of the temperature of the discharged air, the temperature of the combustion gas 22 also decreases. Accordingly, the temperature change of the gas corresponding to the output change can be decreased, and the reliability can be improved. In contrast, when the flow rate of the fuel is decreased and the number of rotations is increased, the compression efficiency decreases, the temperature of the air discharged from the compressor 1 increases, and the operating power of the compressor 1 also increases. Thus, in addition to the decrease of the output caused by the decrease of combustion, the output also decreases for the increase of the operating power of the compressor 1. Further, by the increase of the temperature of the discharged air, the temperature of the combustion gas 22 also increases. Accordingly, the temperature change of the gas corresponding to the output change can be decreased, and the reliability can be improved. A useful synergetic effect like this can be obtained.

In the design of the compressor, an operating point at which the compression efficiency increases during the decrease of the number of rotations and the compression efficiency decreases during the increase of the number of rotations may be set based on a reference state where the frequency converter 10 does not convert the frequency. Accordingly, a useful synergetic effect similar to that mentioned above can be obtained.

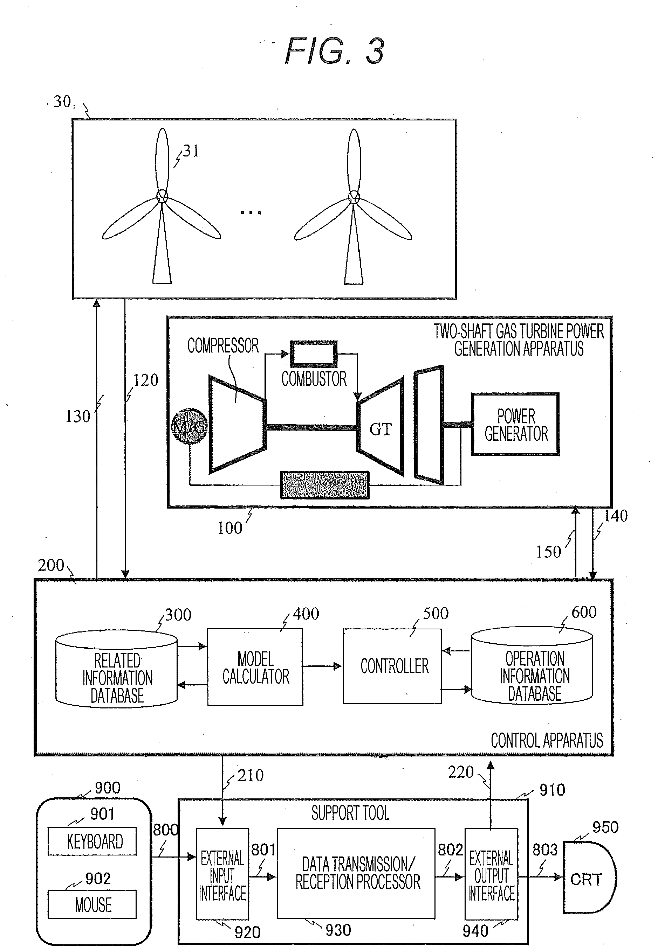

FIG. 3 illustrates wind power generation used as an example of renewable energy. A wind power generation facility 30 includes a plurality of wind power generators 31. An anemometer is provided in the wind power generation facility to measure wind conditions, such that the pitch and yaw of blades of the windmill are controlled according to the wind conditions . Power is generated by receiving wind having at least a fixed wind speed. When the wind is strong, the pitch of the blades is changed so as not to receive the wind, and the blades are stopped. A characteristic of the power generation output relative to the wind speed depends on the design of a wind power generation apparatus. A measurement signal and a control signal are represented by signals 120 and 130, respectively. These signals are needed to control the wind condition information obtained by the wind power generation apparatus, and stored in a control apparatus 200.

A two-shaft gas turbine power generation apparatus 100 receives a control signal 150 from the control apparatus 200 and is controlled to a desired state. A state quantity of each part of the two-shaft gas turbine power generation apparatus 100 is input to the control apparatus 200 as a measurement signal 140.

The control apparatus 200 executes control by manipulating operation terminals according to the measurement signal 140 from the gas turbine power generation apparatus to attain an operation state appropriate for a power generation request.

A related information database 300 stores information for predicting and understanding the current state of the wind power generation. An operation information database 600 stores the measurement signals 120, 140 obtained from the wind power generation facility 10 and the gas turbine power generation apparatus 100, respectively. Format of the data will be described in detail later.

A model calculator 400 calculates an output value to be obtained when a signal that offsets a prediction value and a change in the wind power generation from the information obtained from the measurement signals is input to the two-shaft gas turbine. To calculate the prediction value of the output of the wind power generation, information of the atmospheric air, such as a temperature of the outside air or humidity, a wind speed, an output of the wind power generator, or the like are needed as necessary data. Format of the data will be described in detail later.

A controller 500 receives the result of the model calculator and outputs an appropriate control signal 130. According to the control signal, the air volume and the fuel flow rate of the two-shaft gas turbine are manipulated and the output is controlled. This also applies to the control signal of the frequency converter. Signals and information generated in the control apparatus are also output to a maintenance tool 910. Algorithm to determine the control signals will be described in detail later.

A user who is related to the two-shaft gas turbine power generation apparatus 100 can see various information regarding the gas turbine power generation apparatus 100 with the input apparatus 900, which includes a keyboard 901 and a mouse 902, and the support tool 910 connected to an image display apparatus 950, and can also access to the information in the control apparatus 200.

The support tool 910 includes an external input interface 920, a data transmission/reception processing unit 930, and an external output interface 940.

An input signal 800 generated by the input apparatus 900 is input to the support tool 910 via the external input interface 920. Information from the inside of the control apparatus 200 is also input similarly via the external input interface 920. In the data transmission/reception processing unit 930, an input signal 801 is processed according to the information of the input signal 800 from the user, and transmitted to the external output interface 940 as an output signal 802. An output signal 803 is displayed on the image display apparatus 950.

The measurement signals stored in the related information database 300 and the operation information database 600 are described.

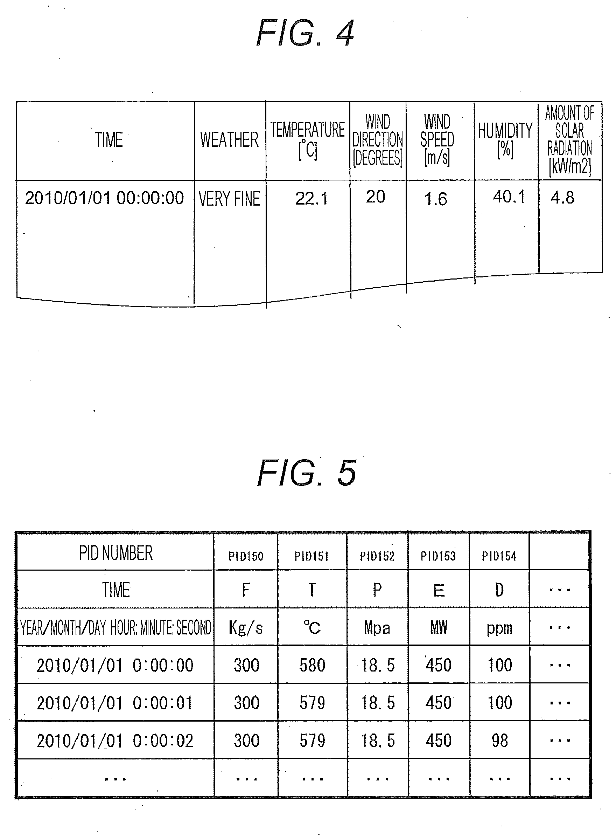

First, FIG. 4 illustrates an information format of weather conditions information. Items illustrated in the drawing are not limited to wind power generation, and other power generation systems, such as solar power generation, using the natural energy may also be intended. A characteristic of the power generation system using the natural energy is the unstable output change due to the influence of wind or sunlight.

As illustrated in FIG. 4, time, weather, a temperature, a wind direction, a wind speed, humidity, and the amount of solar radiation are put in each row. Cycle time is determined based on a measurable time span. Weather is indicated by 15 kinds of weather conditions that have been announced to the public by Japan Meteorological Agency. As to the wind direction, 16 directions are usually used in Japan. However, according to the international standard, 360 directions by scaling 360 degrees in a clockwise direction from due North, which is the reference direction, are used. In the drawing, the direction is indicated in 360 directions, but may also be indicated in 16 directions by multiplying each direction by 22.5 degrees to obtain degrees in numerical form.

Other information, such as design information of the wind power generation facility, design information of the two-shaft gas turbine power generation apparatus, and information of regulations and rules of the system to be connected, are also stored.

Next, information of the measurement signal obtained from the wind power generation facility and the two-shaft gas turbine power generation apparatus is described. FIG. 5 explains an example format of pieces of the information stored in the operation information database 600. As illustrated in FIG. 5, the information measured in the wind power generation facility and the two-shaft gas turbine power generation facility is stored together with measurement time for each measurement device. PID numbers are unique numbers allocated to each measurement value to allow the data stored in the operation information database 600 to be used easily. Alphabetical letters indicated thereunder are symbols indicating objects to be measured. For example, F indicates a flow rate value, T indicates a temperature value, P indicates a pressure value, E indicates a power generation output value, and D indicates a concentration value. In FIG. 5, the data is stored at a cycle time of 1 second, but the sampling period for collecting data may differ depending on the target two-shaft gas turbine power generation facility.

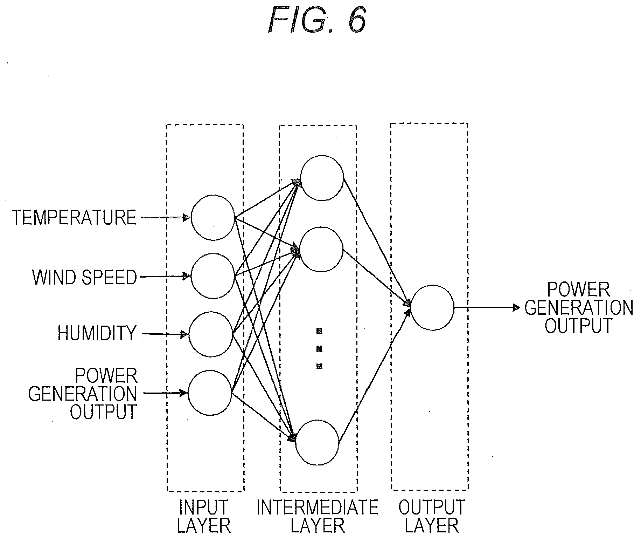

Next, the operation of a prediction arithmetic function of the model calculator 400 in the control apparatus 200 is described by referring FIG. 6. The model is used herein for determining the future output of the wind power generation according to the wind conditions and the current output of the wind power generation. The model includes an input layer, an intermediate layer, and an output layer, with each layer having a plurality of nodes. The nodes are linked with each other from the input layer toward the output layer, and weighting factors indicating the strength of the link are set. That is, the weighting factors exist such that the number of the weighting factors is equal to the number of connections among nodes. This model is called a neural network which simulates a cerebral nerve network of a human body. By entering an input value to the model and adjusting the weighting factor so as to output a desired output values corresponding to the input value, a correlation relationship of the input value can be expressed as a model. This is called learning. When the learning is completed, the input value is entered into the model to estimate the output value based on the correlation relationship of the input value. Generally, an exponential function called a sigmoid function is used for setting the nodes, but the function is not limited thereto. Meanwhile, many algorithms have been devised for appropriately adjusting the weighting factors during learning. In general, a back-propagation method is used. Detailed description of these arithmetic algorithms is available in Usui, S et. al. Basics and Practice: Neural Network: Corona.

To constitute the model, parameters within the model are learned based on the data accumulated in the past or the design data. After the operation has started, prediction is performed based on the learned parameters. When a difference between the prediction value and the actual measurement value becomes larger than the setting value, the model is learned again based on the data having been accumulated heretofore.

In addition, it is determined, according to the mode to be applied, as to whether different models may be generated for individual wind power generators, or one model may be generated for the entire wind firm.

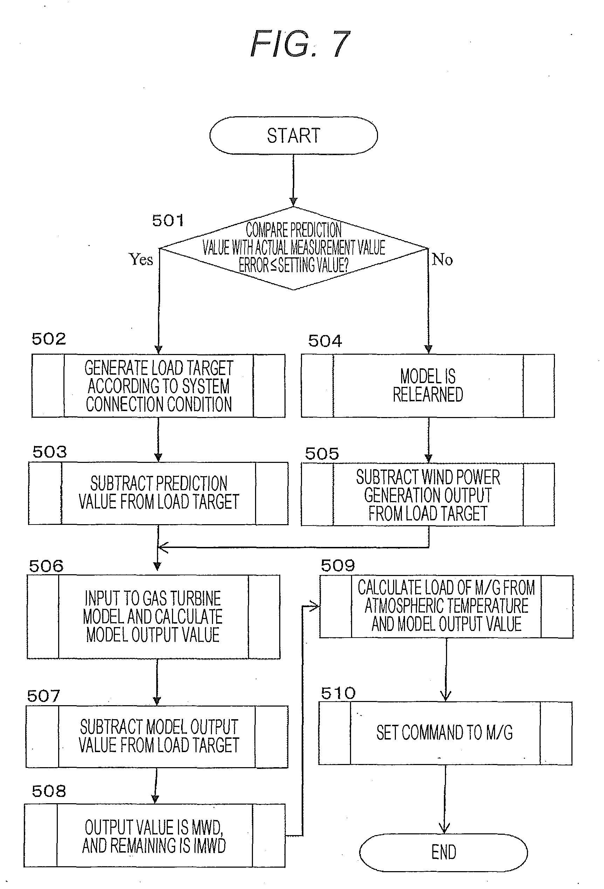

A length of time for prediction is determined according to the characteristic of the power generation output of the two-shaft gas turbine. That is, it is necessary to predict in advance a delay from the supply of the load command to actual power generation. This is also related to the flowchart of FIG. 7.

With the configuration including the prediction means for predicting the change of power supply and demand, and changing the number of rotations according to the prediction value of the change of power supply and demand, the control can be executed in a more appropriate manner.

Next, calculations of the output command to the two-shaft gas turbine power generation apparatus, that is, model calculations of the MWD, which is supplied to the two-shaft gas turbine, and the IMWD, which is supplied to the frequency converter, are described. A model that expresses a dynamic characteristic of the two-shaft gas turbine 27 is previously determined. Usually, a dynamic characteristic model based on the mass balance of the pressure or the flow rate is used, but the modelling based on the neural network used in the prediction calculation of the wind power generation output can also be used. The maximum load change rate of the gas turbine is set in the dynamic characteristic of the two-shaft gas turbine. The amount of power to be supplied from the two-shaft gas turbine power generation apparatus is equivalent to the output that offsets the wind power generation output, that is, the output obtained by subtracting the wind power generation output from a certain target load. Since the two-shaft gas turbine includes a delay due to mechanical elements, the output may be delayed relative to the changing pattern of the input load. As a result of this, the output value from the wind power generation apparatus and the output value from the two-shaft gas turbine 27 do not exactly match, and an offset leakage is generated. This is calculated using the above-described dynamic characteristic model. In this case, the load is followed within the maximum load change rate at which the dynamic characteristic model is set, and the obtained output becomes the MWD to the two-shaft gas turbine without any change. The offset leakage becomes the IMWD to be supplied to the frequency converter.

Next, the operation regarding the generation of the MWD and the IMWD in the controller 500 is described by referring to the flowchart of FIG. 7. By providing the means for calculating the requested load of the gas turbine and the drive load of the compressor so as to satisfy the load target and the system frequency, the control having an excellent system stability and a following property to follow a load target can be achieved.

First, in step 501, an error between the prediction value, which is output from the model generated by the prediction of the wind power generation of the model calculator 400, and the current measurement value is calculated. It is confirmed whether the error is equal to or smaller than a predetermined value. If yes, the process proceeds to step 502. Otherwise, the process proceeds to step 504 and the model illustrated in FIG. 6 is relearned. In step 502, a load target is generated from the connection conditions of the system. The connection conditions of the system differ depending on countries and regions . Many define the load change width and the change width of the system frequency. If some power supplies are already connected in the system, the frequency change can be absorbed even when the gas turbine of the embodiment of the present invention is abruptly changed. Thus, it is sufficient to consider a suppression width of the load change. Meanwhile, when only a few power supplies are connected, such as in the case represented by an island operation, the number of rotations changes when the load of the gas turbine is changed abruptly, and gives an influence to the system frequency. In that case, therefore, the load of the gas turbine needs to be changed at a load change rate within the change width of the system frequency.

In step 503, the prediction value of the wind power generation is subtracted from the load target.

In step 505, the output value of the wind power generation is subtracted from the load target. That is, the prediction value is not used.

In step 506, the value calculated in step 503 or 505 is input to the gas turbine model to calculate the output value of the model. In step 507, the output value of the model calculated in step 506 is subtracted from the load target. In step 508, the model output value is regarded as the MWD and the remaining output value is regarded as the IMWD.

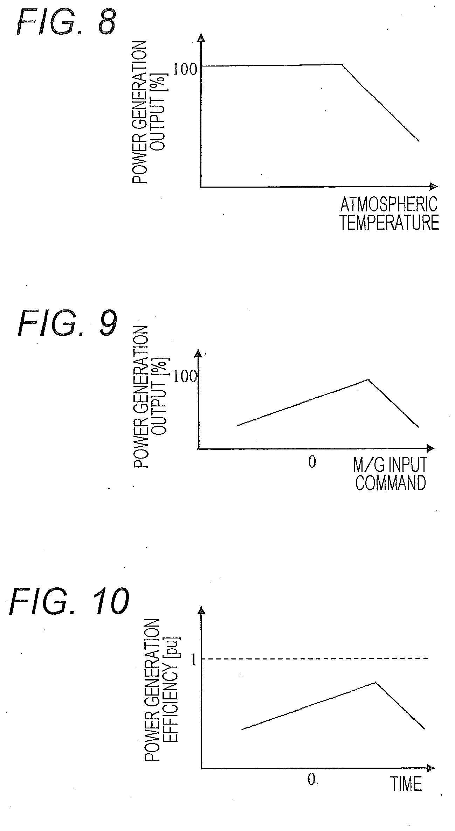

In step 509, the input load to the M/G is calculated according to the atmospheric temperature and the model output value. As a basic characteristic of the gas turbine, the mass flow rate of the compressed air input from the compressor decreases according to the increase of the atmospheric temperature. As a result of this, the power generation output decreases. This is indicated in FIG. 8. At a certain design temperature, the power generation output reaches 100% (rated), but the output decreases as the atmospheric temperature increases.

The two-shaft gas turbine power generation apparatus according to the present embodiment functions as a motor or a power generator by supplying electricity to or applying a load on the M/G connected on the side of the compressor. By supplying electricity to assist the compressor, the output can be improved even when the atmospheric temperature is high. This is illustrated in FIG. 9. At a certain atmospheric temperature, the M/G input command is 0, that is, the power generation output decreases from 100% in a normal two-shaft gas turbine. When the electricity is supplied (to the right of the axis), the driving force of the compressor increases and the amount of the intake air further increases even when the IGV is in a full opening state. Accordingly, the mass flow rate can be increased and the output can be increased. However, the increase cannot continue without a limit. When an additional fuel is supplied in response to the increase, the combustion temperature is raised, but when the temperature reaches a limit, the fuel supply is restricted and the increase is reversed and a decrease starts.

This also applies to the efficiency of the power generation. As illustrated in FIG. 10, the efficiency decreases when the operation continues with a partial load, rather than the rated load. This is because the compressor is designed to reach the optimal efficiency at the rated point. When the electricity is supplied to the M/G (to the right of the axis), the operating point of the compressor comes closer to the rated point to increase the efficiency of the compressor. Therefore, in step 509, an assist amount for the M/G is determined such that both the atmospheric temperature condition and the partial load condition reach the optimal conditions, respectively. Specifically, the assist amount is determined as a value at which a sum of the increase amount of the power generation output and the increase amount of the power generation efficiency relative to the increase of the assist amount becomes the maximum. However, it is not limited to use the sum. The assist amount may be selected such that at least one of the increase amounts reaches the maximum. Thus, the assist amount can be appropriately adjusted by controlling the control signal output from the frequency converter 10, in response to the input of the atmospheric temperature and the output value from the gas turbine dynamic characteristic model, which calculates the output value of the gas turbine corresponding to a certain input value.

In step 510, the assist amount calculated in the previous step is set as the command for the M/G.

Next, a method for displaying information, which includes the measurement signal 120, the control signal 130, the related information database 300, the setting values, and the operation information database 600, on the image display apparatus 950 by the user using the support tool 910 is described.

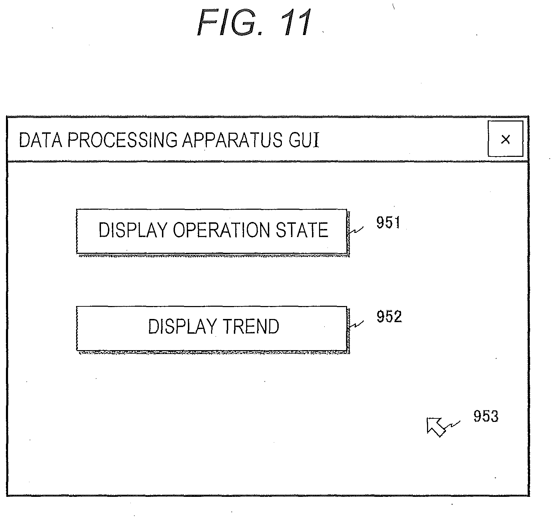

FIGS. 11 to 14 illustrate examples of screens displayed on the image display apparatus 950. The user uses the keyboard 901 and the mouse 902 to execute operations, such as inputting parameter values to blank portions on the screen.

FIG. 11 illustrates an initial screen displayed on the image display apparatus 950. The user selects a necessary button of from an operation state display button 951 or a trend display button 952, and moves a cursor 953 with the mouse 902 and clicks the mouse 902 to display a desired screen.

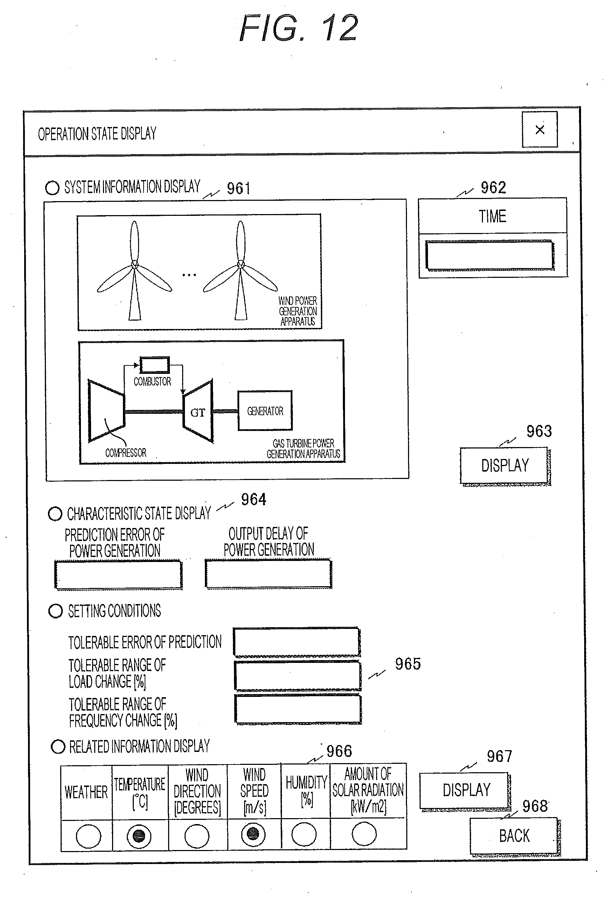

FIG. 12 illustrates an operation state display screen. The screen of FIG. 12 is displayed by clicking the operation state display button 951 in FIG. 11. In a system information display space 961, the user inputs desired time to be displayed on the image display apparatus 950 in a time input space 962. By clicking a display button 963, various states at the time are displayed in the display space. Specifically, the state of a device, such as the state quantity, i.e., a temperature or a pressure of a portion that is currently measured, is displayed. A characteristic state display 964 indicates the state of a determination setting value according to the flowchart of FIG. 7. In setting conditions 965, various conditions of the flowchart illustrated in FIG. 7 are displayed. Specifically, a tolerable error of prediction, a tolerable range of the load change, and a tolerable range of the frequency change are displayed. In a related information display space 986, an item desired to be displayed is selected among the weather, the temperature, the wind direction, the wind speed, humidity, and the amount of solar radiation. A display button 967 is then clicked to search the related information database 300 and display the information including the selected information.

By clicking a back button 968 in FIG. 12, the screen of FIG. 11 resumes.

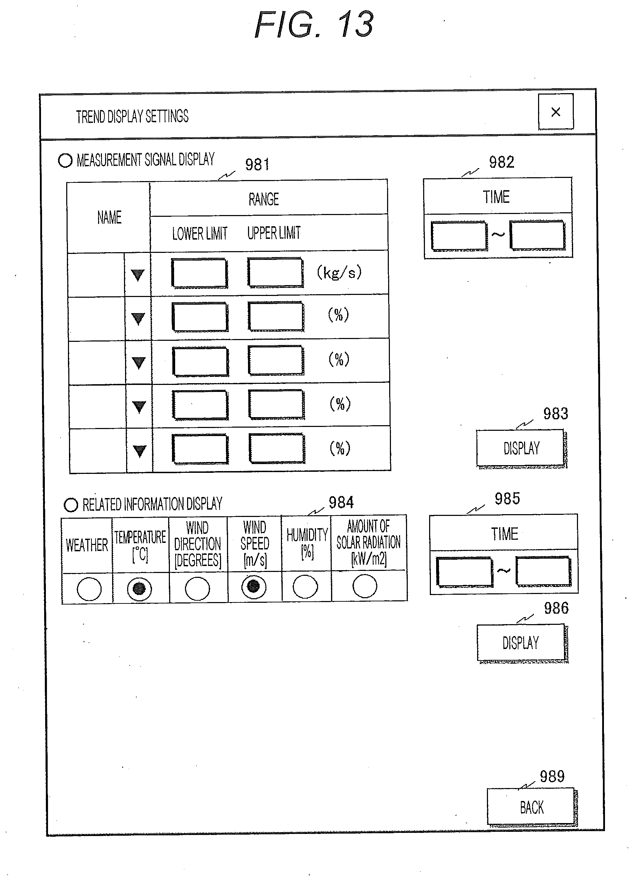

FIG. 13 is a setting screen to display trend on the image display apparatus 950. By clicking the trend display button 952 in FIG. 11, the screen of FIG. 13 is displayed.

In a measurement signal display space 981, the user inputs, in an input space 981, the measurement signal or the operation signal desired to be displayed on the image display apparatus 950 together with a range (upper limit/lower limit) of the signal. In addition, the desired time to be displayed is input to a time input space 982.

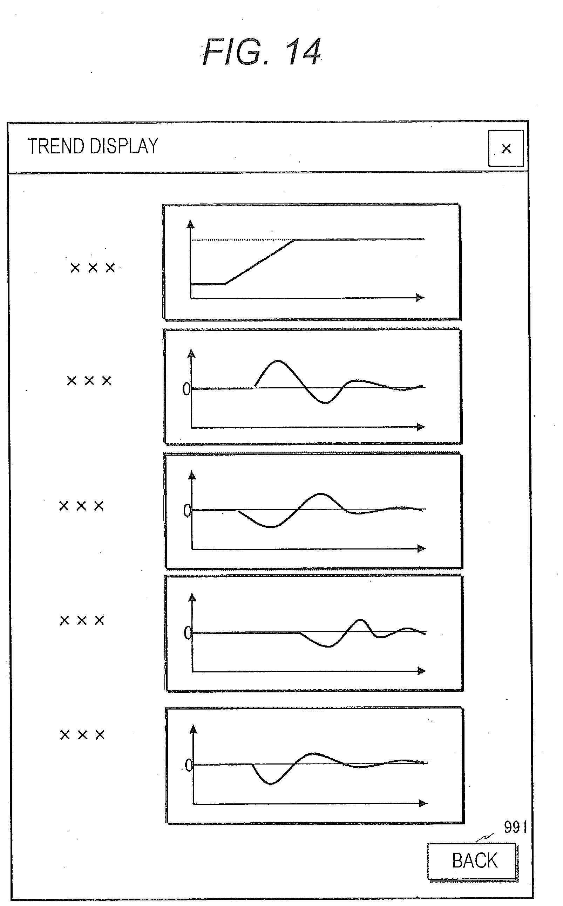

By clicking a display button 963, trend graphs are displayed on the image display apparatus 950 as illustrated in FIG. 14. By clicking a back button 991 of FIG. 14, the screen of FIG. 13 resumes.

In a related information display space 984, any one of the weather, the temperature, the wind direction, the wind speed, humidity, and the amount of solar radiation is selected. A display button 985 is then clicked to search the related information database 300 and display information including the selected information. As described above, to express the weather, 15 kinds of weather conditions announced to the public by Japan Meteorological Agency are used. Numbers are allocated according to the type to display trends. That is, the numbers up to 14 are allocated in such a manner that 0 indicates very fine, 1 indicates fine, 2 indicates a bit cloudy, and so on. By inputting the desired time to be displayed in the time input space 985 and clicking the display button 986, the trend graphs are displayed on the image display apparatus 950 as illustrated in FIG. 14.

By clicking a back button 989 in FIG. 13, the screen of FIG. 10 resumes.

By providing the output function to allow the control apparatus to output various signals to the display apparatus to display the screens described above, it is possible to help the operator to execute control in a better way. In particular, it would be preferable if at least the tolerance range of the load change or the tolerance range of the frequency change can be displayed, because the operator can then easily recognize how the current operation affects the load or the system.

### Second Embodiment

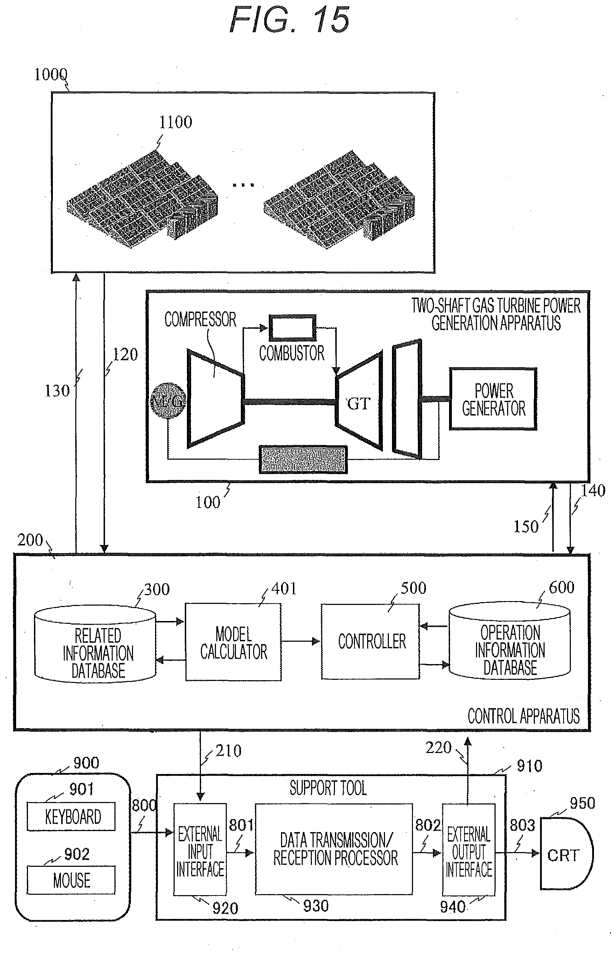

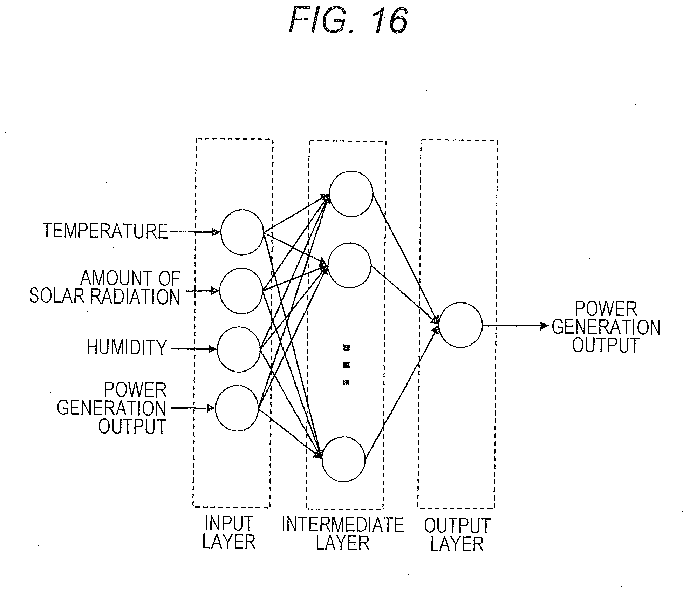

FIG. 15 is an explanatory diagram illustrating a control apparatus and a control method of the gas turbine capable of corresponding to the renewable energy according to a second embodiment in which main devices illustrated in FIG. 1 are included. This is for solar power generation, instead of wind power generation. A solar power generation apparatus 1000 is provided as combinations of solar panels 1100. In this case, various constituent elements and operations thereof remains the same, except for a model calculator 401 that functions as a prediction portion of the solar power generation, which will be described in detail below. As illustrated in FIG. 16, the model is used herein for predicting the future power generation output according to the input data including the temperature, humidity, the amount of solar radiation, and the power generation output. Other devices, the process flow and operation regarding the generation of the MWD, and the operation of the controller are similar to those of the first embodiment. Related measurement values, however, may be different.

In the embodiments described above, the multi-shaft gas turbine power generation system includes the compressor 1 that compresses air to generate compressed air, the combustor 20 that generates a combustion gas from the compressed air and fuel, the gas generator 15 including the high pressure turbine 2a driven by the combustion gas, the power turbine 16 including the low pressure turbine 2b driven by the gas exhausted from the gas generator 15 and the main power generator 5 that generates power by the rotational force of the low pressure turbine 2b to supply power to the system, the sub-electric motor/power generator 6 configured to be an electric motor and power generator and connected to the gas generator 15 and the power turbine 16 via the frequency converter 10, and the control apparatus 200. The gas generator 15 and the power turbine 16 have different shafts. The control apparatus 200 receives the load target of the system and the load change factor of the system, and outputs the control signal of the frequency converter.

By controlling the frequency converter according to the load target of the system and the output change of the system, the power generation system having an high following property to follow the load change can be provided. This is because the mechanical delay of the gas turbine is compensated for by inertia of the compressor shaft or absorption/discharging of the electric energy, such that power generation and power supply can be executed within the regulations of the system to be connected. This can be realized with the smallest system, because no facility corresponding to surplus power is needed. In addition, a high versatility is achieved due to the ability of corresponding to any type of system.

Such effects becomes particularly apparent by changing the number of rotations of the gas generator 15 by the frequency converter 10, when the output change exceeding the change amount of the load change due to the flow rate control of the fuel of the gas turbine is requested.

As an example of the load change factor of the system herein, the information from the power generation system using the natural energy has been described. The wind power generation has been described in the first embodiment and the solar power generation has been described in the second embodiment. Similar effects can be obtained so long as the power generation system includes a variable power supply quantity to the systems.

In the embodiments, the databases have been described in the format included in the control apparatus 200, but the databases can be provided as separate devices. As to the control apparatus 200 itself, only an example has been described in FIG. 3, but the configuration is not limited thereto. It is important to execute the control capable of achieving the advantage and effects described so far. It does not matter whether only one control apparatus is provided or a plurality of control apparatuses is provided to share the function. The gas turbine power generation facility and the wind power generation facility or the like may respectively include the control apparatus.

In the first and second embodiments, the power generation apparatus only includes the two-shaft gas turbine, but multi-shaft gas turbines having more than two shafts may be used. Alternatively, a combined cycle power generation apparatus that generates power using the exhaust heat of the gas turbine to generate steam and operate a steam turbine may also be applicable in a similar manner.

### Reference Signs List

- 1: compressor
- 2: turbine
- 2a: high pressure turbine
- 2b: low pressure turbine
- 5: power generator
- 6: sub-electric motor/power generator
- 7: GT control apparatus
- 7a: GT control apparatus
- 7b: GT control apparatus
- 8: fuel flow rate control valve
- 9: IGV
- 10: frequency converter
- 12: turbine shaft
- 12a: gas generator shaft
- 12b: power turbine shaft
- 14: exhaust
- 15: gas generator
- 16: power turbine
- 17: single-shaft gas turbine
- 18: combustion burner
- 19: combustor liner
- 20: combustor
- 21: compressed air
- 22: combustion gas
- 23: cooling air
- 24: stator vane
- 25: rotor vane
- 26: rotation speed detector
- 26a: rotational speed detector for high pressure turbine
- 26b: rotational speed detector for low pressure turbine
- 27: two-shaft gas turbine
- 30: wind power generation facility
- 31: wind power generator
- 100: gas turbine power generation apparatus
- 200: control apparatus
- 300: related information database
- 400: prediction unit of wind power generation
- 401: prediction unit of solar power generation
- 500: controller
- 600: operation information database
- 900: input device
- 901: keyboard
- 902: mouse
- 910: support tool
- 920: external input interface
- 930: data transmission/reception processing unit
- 940: external output interface
- 950: image display apparatus
- 1000: solar power generation apparatus
- 1100: solar panel

## Claims

1. A multi-shaft gas turbine power generation system, comprising:
a gas generator (15) including :
a compressor (1) that is configured to compress air in order to generate compressed air (21),
a combustor (20) that is configured to generate a combustion gas (22) from the compressed air (21) and fuel, and a high pressure turbine (2a) driven by the combustion gas (22);
a power turbine (16) including a low pressure turbine (2b) driven by a gas exhausted from the gas generator (15) and a main power generator (5) that is configured to generate power by a rotational force of the low pressure turbine (2b) in order to supply power to a power system, the gas generator (15) and the power turbine (16) having different shafts (12a,12b);
an electric motor and power generator (6) connected by the gas generator shaft (12a) to the gas generator (15) and to the power system via a frequency converter (10);
a natural energy power generation system (30) that is configured to use renewable energy; and
a control apparatus (7a), wherein the control apparatus (7a) is configured to receive a load target (MWD) of the power system and a load change factor, which is information from the natural energy power generation system (30) using renewable energy, and is configured to output a control signal (IMWD) that controls the output power of the frequency converter (10).

2. The multi-shaft gas turbine power generation system according to claim 1, comprising:
a gas turbine dynamic characteristic model that is configured to calculate an output value of the gas turbine corresponding to an input value, wherein
the multi-shaft gas turbine power generation system is configured to receive an output value from the gas turbine dynamic characteristic model and an input of an atmospheric temperature, and is configured to output a control signal of the frequency converter (10).

3. The multi-shaft gas turbine power generation system according to claim 1, wherein
the compressor (1) includes an inlet guide vane (9), and
the control apparatus (7a) is configured to control the inlet guide vane (9) to suppress a flow rate change of air flowing through the compressor (1), when the number of rotations of the gas generator (15) is changed by the operation of the frequency converter (10).

4. The multi-shaft gas turbine power generation system according to claim 1, comprising:
means for predicting a change of power supply and demand, wherein
the multi-shaft gas turbine power generation system is configured to change the number of rotations to match a prediction value of the change of the power supply and demand.

5. The multi-shaft gas turbine power generation system according to claim 1, comprising:
means for calculating a requested load of the gas turbine and a drive load of the compressor (1) of the gas turbine to satisfy a load target (MWD) and a power system frequency.

6. The multi-shaft gas turbine power generation system according to claim 1, wherein
the control apparatus (7a) includes a function for outputting a signal for displaying at least a tolerable range of the load change or a tolerable range of the frequency on a display apparatus (950).

7. A method for controlling a multi-shaft gas turbine power generation system that supplies power to a power system, the multi-shaft gas turbine power generation system (100) including a main power generator (5) connected coaxially with a low pressure turbine (2b) by a power turbine shaft (12b), an electric motor and power generator (6) connected coaxially with a compressor (1) by a gas generator shaft (12a) which is different from the power turbine shaft (12b), a natural energy power generation system (30) using renewable energy, and a frequency converter (10) connecting the main power generator (5) and the electric motor and power generator (6) to the power system, the method comprising:
controlling the frequency converter (10) based on a load target (MWD) of the power system and an output change of the gas turbine power generation system (100) which is an output change of the natural energy power generation system (30) using renewable energy.

8. The method for controlling the multi-shaft gas turbine power generation system according to claim 7, comprising:
changing the number of rotations of the gas generator (15) by the frequency converter (10), when an output change that exceeds a change amount of the load change due to a fuel flow rate control is requested.

9. The method for controlling the multi-shaft gas turbine power generation system according to claim 7, comprising:
decreasing the number of rotations of the gas generator (15) while increasing the fuel flow rate, or increasing the number of rotations of the gas generator (15) while decreasing the fuel flow rate.

## Patentansprüche

1. Mehrwellen-Gasturbinenleistungserzeugungssystem, das Folgendes umfasst:
einen Gasgenerator (15), der Folgendes enthält:
einen Kompressor (1), der konfiguriert ist, Luft zu komprimieren, um komprimierte Luft (21) zu erzeugen,
eine Verbrennungsvorrichtung (20), die konfiguriert ist, ein Verbrennungsgas (22) aus der komprimierten Luft (21) und Brennstoff zu erzeugen, und eine Hochdruckturbine (2a), die durch das Verbrennungsgas (22) angetrieben wird;
eine Leistungsturbine (16), die eine Niederdruckturbine (2b), die durch ein Gas, das aus dem Gasgenerator (15) ausgelassen wird, angetrieben wird, und einen Hauptleistungsgenerator (5), der konfiguriert ist, Leistung durch eine Rotationskraft der Niederdruckturbine (2b) zu erzeugen, um einem Stromversorgungssystem Leistung zuzuführen, enthält, wobei der Gasgenerator (15) und die Leistungsturbine (16) verschiedene Wellen (12a, 12b) besitzen;
einen Elektromotor und Leistungsgenerator (6), der durch die Gasgeneratorwelle (12a) mit dem Gasgenerator (15) und mit dem Stromversorgungssystem mittels eines Frequenzumsetzers (10) verbunden ist;
ein Naturenergie-Leistungserzeugungssystem (30), das konfiguriert ist, erneuerbare Energie zu verwenden; und
eine Steuervorrichtung (7a), wobei
die Steuervorrichtung (7a) konfiguriert ist, ein Lastziel (MWD) des Stromversorgungssystems und einen Laständerungsfaktor, was Informationen vom Naturenergie-Leistungserzeugungssystem (30), das erneuerbare Energie verwendet, sind, zu empfangen, und konfiguriert ist, ein Steuersignal (IMWD) auszugeben, das die Ausgangsleistung des Frequenzumsetzers (10) steuert.

2. Mehrwellen-Gasturbinenleistungserzeugungssystem nach Anspruch 1, das Folgendes umfasst:
ein dynamisches Gasturbinencharakteristikmodell, das konfiguriert ist, einen Ausgangswert der Gasturbine, der einem Eingangswert entspricht, zu berechnen, wobei
das Mehrwellen-Gasturbinenleistungserzeugungssystem konfiguriert ist, einen Ausgangswert vom dynamischen Gasturbinencharakteristikmodell und eine Eingabe einer Umgebungstemperatur zu empfangen, und konfiguriert ist, ein Steuersignal des Frequenzumsetzers (10) auszugeben.

3. Mehrwellen-Gasturbinenleistungserzeugungssystem nach Anspruch 1, wobei
der Kompressor (1) eine Einlassleitschaufel (9) enthält und
die Steuervorrichtung (7a) konfiguriert ist, die Einlassleitschaufel (9) zu steuern, eine Durchflussmengenänderung von Luft, die durch den Kompressor (1) strömt, zu unterdrücken, wenn die Drehzahl des Gasgenerators (15) durch den Betrieb des Frequenzumsetzers (10) geändert wird.

4. Mehrwellen-Gasturbinenleistungserzeugungssystem nach Anspruch 1, das Folgendes umfasst:
Mittel zum Vorhersagen einer Änderung von Leistungszufuhr und Leistungsbedarf, wobei
das Mehrwellen-Gasturbinenleistungserzeugungssystem konfiguriert ist, die Drehzahl derart zu ändern, dass sie mit einem Vorhersagewert der Änderung der Leistungszufuhr und des Leistungsbedarfs übereinstimmt.

5. Mehrwellen-Gasturbinenleistungserzeugungssystem nach Anspruch 1, das Folgendes umfasst:
Mittel zum Berechnen einer angeforderten Last der Gasturbine und einer Antriebslast des Kompressors (1) der Gasturbine derart, dass sie einem Lastziel (MWD) und einer Stromsystemfrequenz gerecht werden.

6. Mehrwellen-Gasturbinenleistungserzeugungssystem nach Anspruch 1, wobei
die Steuervorrichtung (7a) eine Funktion zum Ausgeben eines Signals zum Anzeigen eines tolerablen Bereichs der Laständerung und/oder eines tolerablen Bereichs der Frequenz auf einer Anzeigevorrichtung (950) enthält.

7. Verfahren zum Steuern eines Mehrwellen-Gasturbinenleistungserzeugungssystems, das einem Stromversorgungssystem Leistung zuführt, wobei das Mehrwellen-Gasturbinenleistungserzeugungssystem (100) einen Hauptleistungsgenerator (5), der durch eine Leistungsturbinenwelle (12b) mit einer Niederdruckturbine (2b) koaxial verbunden ist, enthält, einen Elektromotor und Leistungsgenerator (6), der durch eine Gasgeneratorwelle (12a), die von der Leistungsturbinenwelle (12b) verschieden ist, mit einem Kompressor (1) verbunden ist, ein Naturenergie-Leistungserzeugungssystem (30), das erneuerbare Energie verwendet, und einen Frequenzumsetzer (10), der den Hauptleistungsgenerator (5) und den Elektromotor und Leistungsgenerator (6) mit dem Stromversorgungssystem verbindet, wobei das Verfahren Folgendes umfasst:
Steuern des Frequenzumsetzers (10) auf der Grundlage eines Lastziels (MWD) des Stromversorgungssystems und einer Ausgangsänderung des Gasturbinenleistungserzeugungssystems (100), die eine Ausgangsänderung des Naturenergie-Leistungserzeugungssystems (30), das erneuerbare Energie verwendet, ist.

8. Verfahren zum Steuern des Mehrwellen-Gasturbinenleistungserzeugungssystems nach Anspruch 7, das Folgendes umfasst:
Ändern der Drehzahl des Gasgenerators (15) durch den Frequenzumsetzer (1), wenn eine Ausgangsänderung, die einen Änderungsbetrag der Laständerung aufgrund einer Brennstoffdurchflussmengensteuerung überschreitet, angefordert wird.

9. Verfahren zum Steuern des Mehrwellen-Gasturbinenleistungserzeugungssystems nach Anspruch 7, das Folgendes umfasst:
Verringern der Drehzahl des Gasgenerators (15), während die Brennstoffdurchflussmenge erhöht wird, oder Erhöhen der Drehzahl des Gasgenerators (15), während die Brennstoffdurchflussmenge verringert wird.

## Revendications

1. Système de génération de puissance par turbine à gaz à arbres multiples, comprenant :
un générateur de gaz (15) incluant :
un compresseur (1) qui est configuré pour comprimer de l'air afin de générer de l'air comprimé (21),
une unité de combustion (20) qui est configurée pour générer des gaz de combustion (22) à partir de l'air comprimé (21) et d'un combustible, et
une turbine à haute pression (2a) entraînée par les gaz de combustion (22) ;
une turbine de puissance (16) incluant une turbine à basse pression (2b) entraînée par un gaz qui s'échappe du générateur de gaz (15) et un générateur de puissance principal (5) qui est configuré pour générer une puissance par une force de rotation de la turbine à basse pression (2b) afin de fournir une puissance à un système de puissance, le générateur de gaz (15) et la turbine de puissance (16) ayant des arbres différents (12a, 12b) ;
un moteur électrique et générateur de puissance (6) connecté par l'arbre (12a) au générateur de gaz (15) et au système de puissance via un convertisseur de fréquence (10) ;
un système de génération de puissance à énergie naturelle (30) qui est configuré pour utiliser une énergie renouvelable ; et
un appareil de commande (7a),
l'appareil de commande (7a) étant configuré pour recevoir une cible de charge (MWD) du système de puissance et un facteur de changement de charge, qui est une information provenant du système de génération de puissance à énergie naturelle (30) utilisant une énergie renouvelable, et étant configuré pour délivrer un signal de commande (IMWD) qui commande la puissance de sortie du convertisseur de puissance (10).

2. Système de génération de puissance avec turbine à gaz à arbres multiples selon la revendication 1, comprenant :
un modèle caractéristique dynamique de turbine à gaz qui est configuré pour calculer une valeur de sortie de la turbine à gaz correspondant à une valeur en entrée, dans lequel
le système de génération de puissance avec turbine à gaz à arbres multiples est configuré pour recevoir une valeur de sortie provenant du modèle caractéristique dynamique de turbine à gaz et une entrée d'une température atmosphérique, et est configuré pour délivrer un signal de commande du convertisseur de fréquence (10).

3. Système de génération de puissance par turbine à gaz à arbres multiples selon la revendication 1, dans lequel
le compresseur (1) inclut une aube de guidage d'entrée (9), et
l'appareil de commande (7a) est configuré pour commander l'aube de guidage d'entrée (9) afin de supprimer un changement du débit de l'air qui s'écoule à travers le compresseur (1) lorsque la vitesse de rotation du générateur de gaz (15) est changée par le fonctionnement du convertisseur de fréquence (10).

4. Système de génération de puissance par turbine à gaz à arbres multiples selon la revendication 1, comprenant :
un moyen pour prédire un changement de la fourniture et de la demande de puissance, dans lequel
le système de génération de puissance par turbine à gaz à arbres multiples est configuré pour changer la vitesse de rotation afin de s'accorder à une valeur prédite du changement de la fourniture et de la demande de puissance.

5. Système de génération de puissance par turbine à gaz à arbres multiples selon la revendication 1, comprenant :
un moyen pour calculer une charge requise de la turbine à gaz et une charge d'entraînement du compresseur (1) de la turbine à gaz pour satisfaire une cible de charge (MWD) et une fréquence du système de puissance.

6. Système de génération de puissance par turbine à gaz à arbres multiples selon la revendication 1, dans lequel
l'appareil de commande (7a) inclut une fonction pour délivrer un signal afin d'afficher au moins une plage tolérable du changement de charge ou une plage tolérable de la fréquence sur un appareil d'affichage (950).

7. Procédé pour commander un système de génération de puissance par turbine à gaz à arbres multiples qui fournit une puissance à un système de puissance, le système de génération de puissance par turbine à gaz à arbres multiples (100) incluant un générateur de puissance principal (5) connecté coaxialement à une turbine à basse pression (2b) par un arbre (12b) de la turbine de puissance, et un moteur électrique et générateur de puissance (6) connecté coaxialement à un compresseur (1) par un arbre (12a) qui est différent de l'arbre (12b) de la turbine de puissance, un système de génération de puissance à énergie naturelle (30) utilisant une énergie renouvelable, et un convertisseur de puissance (10) qui connecte le générateur de puissance principal (5) et le moteur électrique et générateur de puissance (6) au système de puissance,
le procédé comprenant :
l'étape consistant à commander le convertisseur de puissance (10) sur la base d'une cible de charge (MWD) du système de puissance et d'un changement de sortie du système de génération de puissance par turbine à gaz (100) qui est un changement de sortie du système de génération de puissance à énergie naturelle (30) utilisant une énergie renouvelable.

8. Procédé pour commander le système de génération de puissance par turbine à gaz à arbres multiples selon la revendication 7, comprenant :
l'étape consistant à changer la vitesse de rotation du générateur de gaz (15) par le convertisseur de fréquence (10), quand un changement de sortie qui excède une valeur de changement du changement de charge en raison d'une commande du débit de carburant est requis.

9. Procédé pour commander le système de génération de puissance par turbine à gaz à arbres multiples selon la revendication 7, comprenant : l'étape consistant à diminuer la vitesse de rotation du générateur de gaz (15) tout en augmentant le débit de combustible, ou à augmenter la vitesse de rotation du générateur de gaz (15) tout en diminuant le débit de combustible.
